# EUROPEAN PATENT APPLICATION

(11) **EP 4 170 815 A1**
(43) Date of publication of application: **26.04.2023**
(21) Application number: 21898591.9
(22) Date of filing: 24.11.2021
(51) Int. Cl.: H01M 50/533, H01M 50/536

(54) **ELECTRODE FOR SECONDARY BATTERY AND METHOD OF MANUFACTURING SAME**

(30) Priority: 25.11.2020 KR 20200160316
(71) Applicant: LG Energy Solution, Ltd., Seoul 07335 (KR)
(72) Inventor: PARK, Geun Young, Daejeon 34122 (KR); SUNG, Joo Hwan, Daejeon 34122 (KR); CHO, Minsu, Daejeon 34122 (KR); KIM, Minseon, Daejeon 34122 (KR)
(74) Representative: Goddar, Heinz J.
(86) International application number: PCT/KR2021/017365
(87) International publication number: WO 2022/114765

(57) **Abstract**

An electrode for secondary battery according to an embodiment of the present disclosure includes: an electrode current collector containing a coated portion, a first active material layer located on the coated portion, and an electrode tab that is electrically connected to the electrode current collector, wherein the electrode tab is located on one surface of the electrode current collector, at least one hole is formed in the electrode tab, and an extension portion of the electrode tab extending through the hole is in contact with the electrode current collector.

## Description

### [TECHNICAL FIELD]

### Cross Citation with Related Application(s)

This application claims the benefit of Korean Patent Application No. 10-2020-0160316 filed on November 25, 2020 with the Korean Intellectual Property Office, the disclosure of which is incorporated herein by reference in its entirety.

The present disclosure relates to an electrode for secondary battery and a method of manufacturing the same, and more particularly, to an electrode for secondary battery having improved electrode process efficiency and increased electrode capacity, and a method of manufacturing the same.

### [BACKGROUND]

Along with the technology development and increased demand for mobile devices, demand for secondary batteries as energy sources has been rapidly increasing. Among these secondary batteries, a lithium secondary battery having high energy density and a high voltage, a long cycle lifespan, and a low self-discharge rate is commercially available and widely used.

In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

The secondary battery can be formed by inserting an electrode assembly composed of a positive electrode, a negative electrode, and a separator into a case, and then sealing the case. Here, the electrode for secondary battery, such as a positive electrode or a negative electrode, includes a coated portion and an uncoated portion on the current collector, the coated portion corresponds to a coating part on which the active material layer coated with the active material slurry is formed, and the uncoated portion corresponds to a non-coating part on which the active material slurry is not coated.

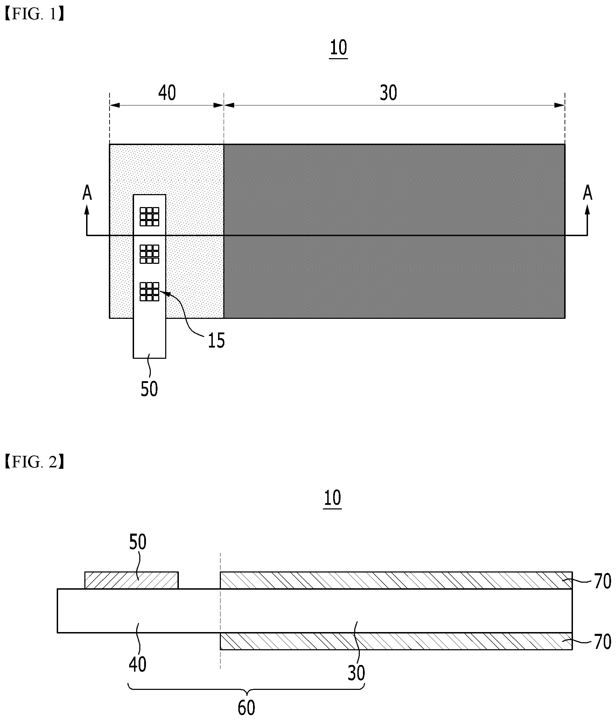

Fig. 1 is a plan view schematically illustrating a conventional electrode for secondary battery. Fig. 2 is a cross-sectional view of the electrode for secondary battery of Fig. 1.

Referring to Figs. 1 and 2, the conventional electrode 10 for secondary battery includes an electrode current collector 60 and an active material layer 70 located on the electrode current collector 60. The active material layer 70 may be composed of an electrode mixture containing an electrode active material, a binder, a conductive material, and the like. In the electrode 10, the ultrasonic welding part 15 is formed on the non-coating part of the electrode current collector 60 through an ultrasonic fusion method or the like, whereby the electrode tab 50 can be attached to the electrode current collector 60. The electrode current collector 60 includes a coated portion 30 on which the active material layer 70 is formed and an uncoated portion 40 on which the active material layer 70 is not formed. At this time, the electrode tab 50 may be fused onto the uncoated portion 40. That is, the uncoated portion 40 is required for the fusion of the electrode tab 50 of the conventional electrode 10 for secondary battery.

However, the formation of the uncoated portion 40 reduces the area of the coated portion 30 coated with the active material layer 70, which results in a decrease in the electrode capacity. Especially in the case of a super small-sized secondary battery, the overall volume of the secondary battery is greatly reduced, but in order to secure a space for fusion of the electrode tab 50, there is a limit to the volume reduction of the uncoated portion 40, and thus the loss of electrode capacity is large. Further, a pattern coating method is used to form the coated portion 30 and the uncoated portion 40. Depending on the pattern coating method, a problem of non-uniformity of slurry loading may occur.

Therefore, there is a need to develop an electrode for reducing the problem caused by the formation of a non-coating part for fusion of the electrode tab 50 in the conventional electrode 10 for secondary battery.

### [DETAILED DESCRIPTION OF THE INVENTION]

### [Technical Problem]

It is an object of the present disclosure to provide an electrode for secondary battery having improved electrode process efficiency and increased electrode capacity, and a method of manufacturing the same.

However, the problem to be solved by embodiments of the present disclosure is not limited to the above-described problems, and can be variously expanded within the scope of the technical idea included in the present disclosure.

### [Technical Solution]

According to one embodiment of the present disclosure, there is provided an electrode for secondary battery comprising: an electrode current collector containing a coated portion, a first active material layer located on the coated portion; and an electrode tab that is electrically connected to the electrode current collector, wherein the electrode tab is located on one surface of the electrode current collector, at least one hole is formed in the electrode tab, and an extension portion of the electrode tab extending through the hole is in contact with the electrode current collector.

The extension portion of the electrode tab may be in contact with a side surface of the electrode current collector exposed by the hole.

The electrode tab may be located on the first active material layer while overlapping the first active material layer.

The electrode current collector has an upper surface on which the first active material layer is located and a bottom surface located on the opposite side of the upper surface, and the extension portion of the electrode tab may be bent so as to overlap the bottom surface of the electrode current collector, thereby forming an electrode tab fixing portion.

The electrode for secondary battery further comprises a second active material layer located on the bottom surface of the electrode current collector, wherein the electrode tab fixing portion may be in contact with the second active material layer.

The electrode for secondary battery further comprises an uncoated portion formed on the same surface as the one surface of the electrode current collector on which the coated portion is formed, wherein the electrode tab is located on the uncoated portion while overlapping the uncoated portion.

The electrode current collector has an upper surface on which the first active material layer is located, and a bottom surface located on the opposite side of the upper surface, and the electrode tab may be in contact with an upper surface of the electrode current collector in the uncoated portion.

The extension portion of the electrode tab may be bent so as to overlap the bottom surface of the electrode current collector, thereby forming an electrode tab fixing portion.

A width of the uncoated portion may be shorter than a width of the coated portion.

According to one embodiment of the present disclosure, there is provided a method of manufacturing an electrode for secondary battery, comprising the steps of: arranging an electrode tab on an electrode current collector so as to overlap each other, forming at least one hole passing through the electrode tab and the electrode current collector, pressing at least one of the upper and lower portions of the electrode including the electrode current collector, and allowing an extension portion of the electrode tab extending along the inner wall of the hole to be bent so as to overlap the bottom surface of the electrode current collector, thereby forming an electrode tab fixing portion.

The method of manufacturing an electrode for secondary battery may further comprise forming a notch or a gap in the electrode tab portion where the hole is formed, before forming a hole in the electrode tab.

The extension portion of the electrode tab may be in contact with a side surface of the electrode current collector exposed by the hole.

In the step of forming an electrode tab fixing portion, a trace of the extension portion of the electrode tab are bent by the pressing force and can come into contact with an active material layer formed on the bottom surface of the electrode current collector or the bottom surface of the electrode current collector.

According to yet another embodiment of the present disclosure, there is provided a secondary battery comprising the above-mentioned electrode for secondary battery.

### [Advantageous Effects]

According to embodiments of the present disclosure, the electrode tab having a plurality of holes on the coated portion is physically fused to the electrode by strong pressure, whereby the efficiency of the electrode process can be improved and the electrode capacity can be increased.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a plan view schematically illustrating a conventional electrode for secondary battery;
Fig. 2 is a cross-sectional view of the electrode for secondary battery of Fig. 1;
Fig. 3 is a plan view of an electrode for secondary battery according to an embodiment of the present disclosure;
Fig. 4 is a cross-sectional view taken along the cutting line B-B of Fig. 3;
Figs. 5 to 7 are views illustrating a method of manufacturing an electrode for secondary battery according to another embodiment of the present disclosure;
Fig. 8 is a plan view illustrating a peripheral state of a hole when viewed from a bottom surface of an electrode current collector in the secondary battery electrode of Fig. 7;
Fig. 9 is a plan view of an electrode for secondary battery according to another embodiment of the present disclosure; and
Fig. 10 is a cross-sectional view taken along the cutting line C-C of Fig. 9.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of parts not related to the description will be omitted herein for clarity, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Hereinafter, the electrode for secondary battery according to one embodiment of the present disclosure will be described. However, the battery herein is described on the basis of the upper surface among the upper and lower surfaces of the battery assembly, without being necessarily limited thereto, and even in the case of the lower surface, a description may be given with same or similar contents.

Hereinafter, each configuration of the electrode 100 for secondary battery according to an embodiment of the present disclosure will be described in detail. However, the electrode 100 herein will be described on the basis of the case of the positive electrode, without being necessarily limited thereto, and even in the case of the negative electrode, a description may be given with same or similar contents.

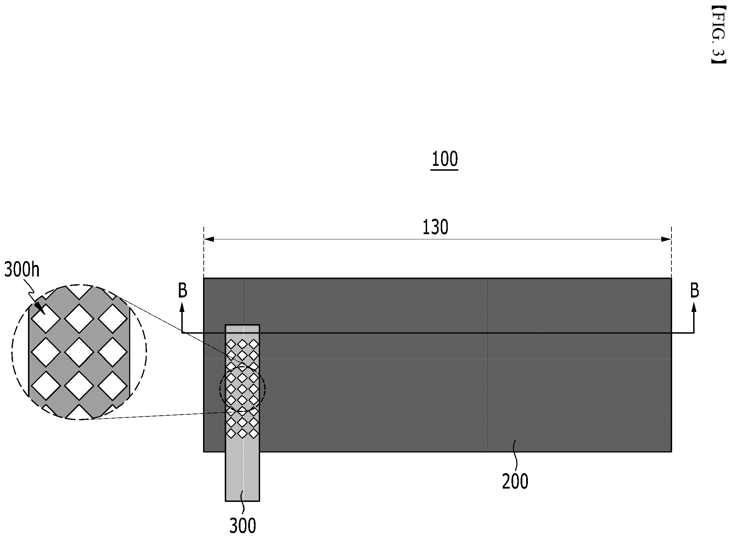

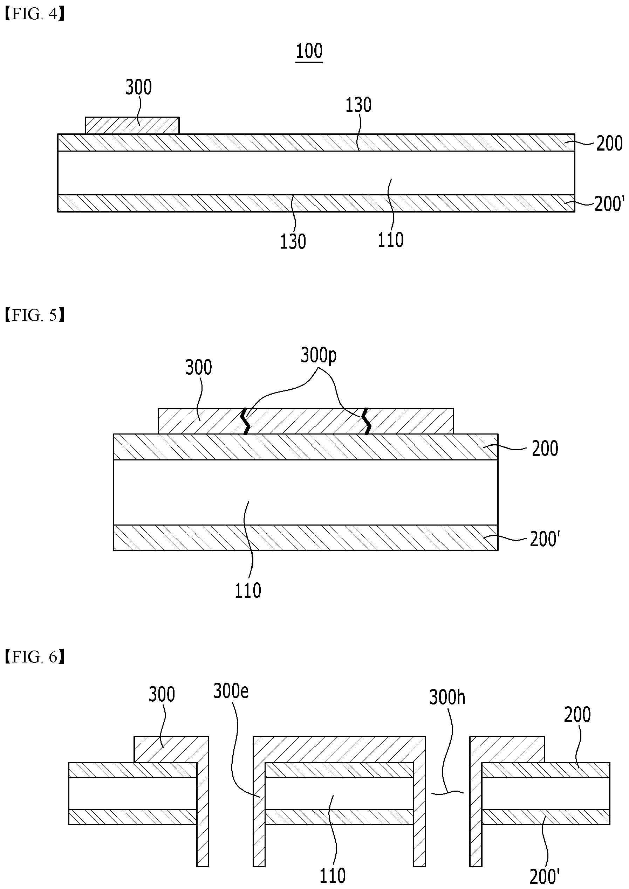

Fig. 3 is a plan view of an electrode for secondary battery according to an embodiment of the present disclosure. Fig. 4 is a cross-sectional view taken along the cutting line B-B of Fig. 3.

Referring to Figs. 3 and 4, the electrode 100 for secondary battery according to an embodiment of the present disclosure includes an electrode current collector 110, an active material layer 200, and an electrode tab 300.

The active material layer 200 may be coated onto the coated portion 130 of the electrode current collector 110 in the form of an electrode slurry. The electrode slurry is a mixture made in a state of low fluidity by mixing fine solid particles in a liquid. The electrode slurry made by mixing a binder with a solvent in a certain ratio can be coated as a thin film onto the electrode current collector, and then dried and pressed to make an electrode for secondary battery.

The active material layer 200 may be located on at least one surface of the upper and lower surfaces of the electrode current collector 110.

The electrode current collector 110 in the present embodiment may include only the coated portion 130. Here, the coated portion 130 of the electrode current collector 110 may be a region on which the electrode composition is coated. Generally, the electrode slurry is prepared by coating a positive electrode mixture containing a mixture of an active material, a conductive material and a binder onto the remaining areas excluding the non-coating part which is a portion at which the electrode tab is formed on the electrode current collector 110, followed by drying and pressing. If necessary, a filler may be further added to the mixture.

However, according to the present embodiment, the active material layer 200 is formed on one surface or both surfaces of the electrode current collector 110 without forming a non-coating part, and thus the electrode tab 300 is directly fused onto a coating part instead of the non-coating part. In other words, the electrode tab 300 may be fused on the active material layer 200.

Further, the electrode current collector 110 is not particularly limited as long as it has high conductivity without causing a chemical change in the battery, and for example, stainless steel, aluminum, nickel, titanium, fired carbon, or aluminum or stainless steel that is surface-treated with carbon, nickel, titanium, silver, or the like can be used. A fine unevenness can be formed on the surface of the positive electrode current collector to increase the binding force of the positive electrode active material. For example, the positive electrode current collector may have various shapes such as films, sheets, foils, nets, porous bodies, foams, and nonwoven fabrics.

Among the electrode current collectors, the negative electrode current collector is not particularly limited as long as it has high conductivity without causing a chemical change in an electrode for secondary battery according to the present embodiment, and for example, copper, stainless steel, aluminum-cadmium alloy, and the like can be used. Further, similarly to the positive electrode current collector, a fine unevenness can be formed on a surface of the negative electrode current collector to increase the binding force of the negative electrode active material, and the negative electrode current collector may have various shapes such as a film, a sheet, a foil, a net, a porous body, a foam body and a non-woven fabric.

The electrode tab 300 according to the present embodiment can be physically fused to the electrode current collector 110. Specifically, at least one hole 300h is formed in the electrode 100 for secondary battery, and the electrode tab 300 on the active material layer 200 is extended along the inner wall of the hole 300h. At this time, the extension portion of the electrode tab 300 may be in contact with the side surface of the electrode current collector 110 exposed by the hole 300h. The extended portion of the electrode tab 300 may be contact with the bottom surface of the electrode current collector 110 or the active material layer 200 formed on the bottom surface of the electrode current collector 110, at the opposite side of the fusion surface of the electrode tab 300.

Next, referring to Fig. 5, a method of manufacturing an electrode for secondary battery according to another embodiment of the present disclosure will be described.

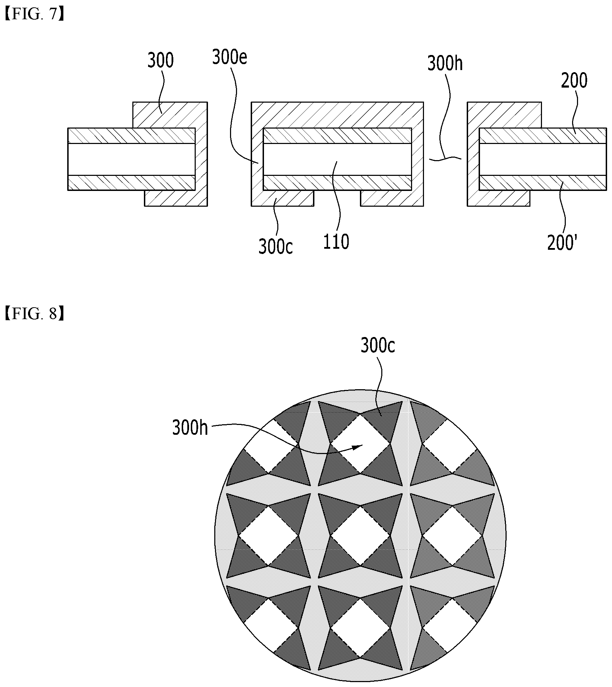

Figs. 5 to 7 are views illustrating a method of manufacturing an electrode for secondary battery according to another embodiment of the present disclosure. Fig. 8 is a plan view illustrating a peripheral state of a hole when viewed from a bottom surface of an electrode current collector in the secondary battery electrode of Fig. 7.

Referring to Fig. 5, the electrode tab 300 may be overlapped and arranged on the active material layer 200 to be fused. After that, a notch or a break may be formed in a portion of the electrode tab 300 in which a hole is to be formed.

Referring to Fig. 6, at least one hole 300h may be formed in the electrode for secondary battery in a state in which the active material layer 200 and the electrode tab 300 are overlapped with each other. At this time, the hole 300h may be formed by a process of forming the notch or break in the portion of the electrode tab 300 and then applying pressure using a pin, but is not limited thereto.

In the process of forming the hole 300h, the electrode tab 300 on the active material layer 200 may be extended along the inner wall of the hole 300h. The extension portion 300e of the electrode tab 300 may be extended long along the inner wall of the hole 300h passing through the active material layer 200 and the electrode current collector 110 as well as the electrode tab 300.

Referring to Fig. 7, in order to physically fuse the electrode tab 300 to the active material layer 200 and the electrode current collector 110, at least one of the upper and lower portions of the electrode for secondary battery may be pressed. At this time, the trace of the extension portion 300e of the electrode tab 300 can be bent by the force due to the pressing and can come into contact with an active material layer 200' formed on the bottom surface of the electrode current collector 110 or the bottom surface of the electrode current collector 110. Specifically, the extension portion 300e of the electrode tab 300 is bent after passing through the hole 300h, and the fixing part 300c of the electrode tab 300 may be formed in the bottom surface of the electrode current collector 110 or the active material layer 200' formed on the bottom surface of the electrode current collector 110. That is, the electrode tab 300 has a structure that passes through the hole 300h and surrounds the active material layers 200 and 200' and the electrode current collector 110, whereby the electrode tab 300 is fixed and can come into contact with the electrode current collector 110. In the case of the fixing, it may be additionally fixed by including a fixing plate (not shown) that is in contact with the electrode tab fixing part 300c and is coupled to the hole 300h, but is not limited thereto.

Referring to Fig. 8, the periphery of the hole 300h viewed from the opposite side of the fusion surface of the electrode tab 300, the trace of the electrode tab 300 is bent to form the electrode tab fixing part 300c and fusion in the form of a clip may occur.

The plurality of holes 300h may be formed in various sizes or shapes. In one example, the plurality of holes 300h may be formed in a circular, quadrangular, triangular, rhombic, or trapezoidal shape, and the sizes of the plurality of holes 300h may be the same or different.

Thereby, physical fusion can be realized instead of the ultrasonic fusion method for fusion between the electrode current collector 110 and the electrode tab 300. The electrode tab 300 can be fused even if there is no non-coating part. The size and number of the holes 300h are not limited, but as the size of the holes 300h is smaller and the number of the holes is larger, the current path increases, which may be advantageous in terms of resistance.

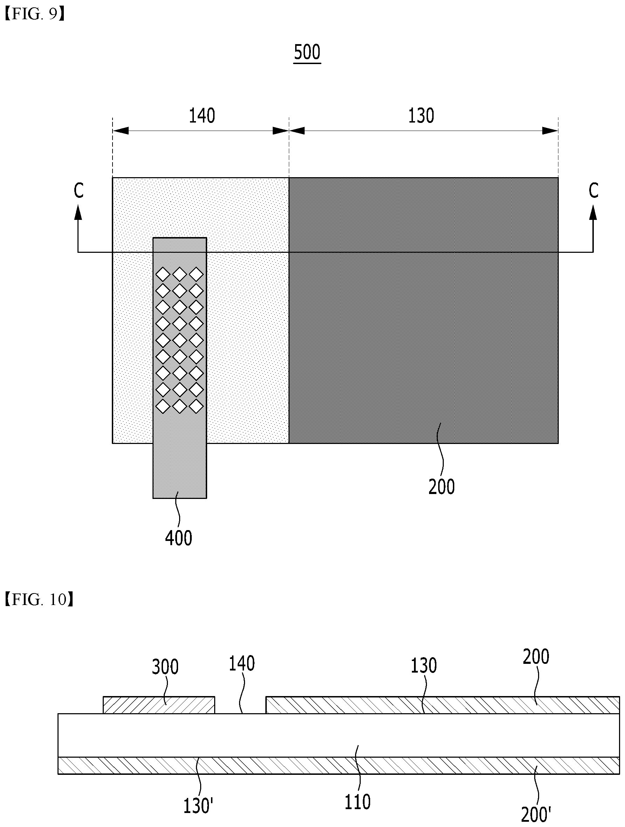

Fig. 9 is a plan view of an electrode for secondary battery according to another embodiment of the present disclosure. Fig. 10 is a cross-sectional view taken along the cutting line C-C of Fig. 9.

Referring to Figs. 9 and 10, the electrode current collector 110 in the present embodiment includes a coated portion 130 and an uncoated portion 140. Here, in the electrode current collector 110, the uncoated portion 140 is a portion on which the active material layer 200 is not formed. The uncoated portion 140 and the coated portion 130 may be formed on one surface of the electrode current collector 110 by a pattern coating method, and the coated portion 130' may be formed without the uncoated portion on the other surface of the electrode current collector 110.

The electrode tab 300 may be located on the uncoated portion 140 of the electrode current collector 110. Further, the electrode tab 300 may be fused to the electrode current collector 110 on the uncoated portion 140 to be fixed to the electrode current collector 110.

The fusion of the electrode tab 300 according to the present embodiment may be the same as in the method described in the embodiments of Figs. 5 to 7. In other words, a plurality of holes are formed in the electrode tab 300 in a state in which the electrode tab 300 is overlapped and arranged on the uncoated portion 150, and then the extension portion of the electrode tab 300 can pass through the hole by pressing. Further, the trace of the electrode tab 300 is bent, and the electrode tab can be fixed and fused to the active material layer formed in the form of a clip on the bottom surface of the electrode current collector or the bottom surface of the electrode current collector.

According to the present embodiment, a non-coating part is formed only in the fusion portion of the electrode tab 300, thereby increasing the contact area for current flow.

The width of the uncoated portion 140 formed on one surface of the electrode current collector 110 is shorter than the width of the coated portion 130 on one surface or the coated portion 130' on the other surface. As the width of the uncoated portion 140 is shorter, the electrode capacity increases, and the problem of non-uniformity occurring during the patterning process can be solved.

However, the width and length of the uncoated portion 140 is not limited to the above-mentioned contents, and as long as it is a width for improving electrode performance, it is not limited thereto and may be formed in various lengths.

The electrode for secondary batteries described above can be applied to various secondary batteries. These secondary batteries can be applied to a cylindrical battery in which the electrode assembly is built into in a cylindrical metal can, a prismatic battery in which the electrode assembly is built into a prismatic metal can, and a pouch type battery in which the electrode assembly is built into a pouch type case of an aluminum laminate sheet, but the present disclosure is not limited thereto and can be applied to various secondary batteries that can use for the electrode for secondary battery.

Although the preferred embodiments of the present disclosure have been described in detail above, the scope of the present disclosure is not limited thereto, and various modifications and improvements made by those skilled in the art using the basic concepts of the present disclosure defined in the following claims also falls within the spirit and scope of the present disclosure.

### [Description of Reference Numerals]

100: electrode for secondary battery
110: electrode current collector
130: coated portion
140: uncoated portion
200: active material layer
300: electrode tab
300h: hole

## Claims

1. An electrode for secondary battery comprising:
an electrode current collector containing a coated portion;
a first active material layer located on the coated portion; and
an electrode tab that is electrically connected to the electrode current collector,
wherein the electrode tab is located on one surface of the electrode current collector, at least one hole is formed in the electrode tab, and an extension portion of the electrode tab extending through the hole is in contact with the electrode current collector.

2. The electrode for secondary battery according to claim 1, wherein:
the extension portion of the electrode tab is in contact with a side surface of the electrode current collector exposed by the hole.

3. The electrode for secondary battery according to claim 2, wherein:
the electrode tab is located on the first active material layer while overlapping the first active material layer.

4. The electrode for secondary battery according to claim 3, wherein:
the electrode current collector has an upper surface on which the first active material layer is located and a bottom surface located on the opposite side of the upper surface, and the extension portion of the electrode tab is bent so as to overlap the bottom surface of the electrode current collector, thereby forming an electrode tab fixing portion.

5. The electrode for secondary battery according to claim 4,
which further comprises a second active material layer located on the bottom surface of the electrode current collector,
wherein the electrode tab fixing portion is in contact with the second active material layer.

6. The electrode for secondary battery according to claim 2,
which further comprises an uncoated portion formed on the same surface as the one surface of the electrode current collector on which the coated portion is formed,
wherein the electrode tab is located on the uncoated portion while overlapping the uncoated portion.

7. The electrode for secondary battery according to claim 6, wherein:
the electrode current collector has an upper surface on which the first active material layer is located, and a bottom surface located on the opposite side of the upper surface, and the electrode tab is in contact with an upper surface of the electrode current collector in the uncoated portion.

8. The electrode for secondary battery according to claim 7, wherein:
the extension portion of the electrode tab is bent so as to overlap the bottom surface of the electrode current collector, thereby forming an electrode tab fixing portion.

9. The electrode for secondary battery according to claim 6, wherein:
a width of the uncoated portion is shorter than a width of the coated portion.

10. A method of manufacturing an electrode for secondary battery, comprising the steps of:
arranging an electrode tab on an electrode current collector so as to overlap each other,
forming at least one hole passing through the electrode tab and the electrode current collector,
pressing at least one of the upper and lower portions of the electrode including the electrode current collector, and
allowing an extension portion of the electrode tab extending along the inner wall of the hole to be bent so as to overlap the bottom surface of the electrode current collector, thereby forming an electrode tab fixing portion.

11. The method of manufacturing an electrode for secondary battery according to claim 10,
which further comprises forming a notch or a gap in the electrode tab portion where the hole is formed, before forming a hole in the electrode tab.

12. The method of manufacturing an electrode for secondary battery according to claim 11, wherein:
the extension portion of the electrode tab is in contact with a side surface of the electrode current collector exposed by the hole.

13. The method of manufacturing an electrode for secondary battery according to claim 10, wherein:
in the step of forming an electrode tab fixing portion, a trace of the extension portion of the electrode tab is bent by the pressing force and comes into contact with an active material layer formed on the bottom surface of the electrode current collector or the bottom surface of the electrode current collector.

14. A secondary battery comprising the electrode for secondary battery according to claim 1.
